# FASCICULE DE BREVET EUROPEEN

(11) **EP 0 544 220 B1**
(45) Date de publication et mention de la délivrance du brevet: **18.06.1997**
(21) Numéro de dépôt: 92119970.9
(22) Date de dépôt: 24.11.1992
(51) Int. Cl.: B61G 11/16, F16F 3/02

(54) **Dispositif d'amortissement de choc, en particulier pour véhicules ferroviaires**
Stossverzehrvorrichtung, insbesondere für Eisenbahnfahrzeuge
Shock absorbing device, especially for railway vehicles

(30) Priorité: 27.11.1991 FR 9114637
(43) Date de publication de la demande: 02.06.1993
(73) Titulaire: GEC ALSTHOM SA, 75116 Paris (FR)
(72) Inventeur: Halais, Pierre, F-93160 Noisy le Grand (FR)
(74) Mandataire: Weinmiller, Jürgen

(56) Documents cités:
- DE-A- 3 920 993
- DE-C- 446 174
- US-A- 1 953 050

## Description

La présente invention concerne un dispositif d'amortissement de choc, en particulier pour véhicules ferroviaires.

On connaît des dispositifs d'amortissement de choc constitués par des systèmes à déformation réversible basés sur une dégradation de l'énergie par frottement sec ou visqueux. Ainsi, dans le domaine ferroviaire ils sont installés dans les tampons et dans les cartouches des attelages automatiques. Ces systèmes présentent l'inconvénient d'avoir un bas niveau d'absorption d'énergie, environ 50 kJ par organe.

Un autre dispositif amortisseur de choc est constitué par le bouclier placé sur une motrice de train, en particulier pour train à grande vitesse, et destiné à la protection du conducteur. Un tel bouclier est constitué par une structure en nid d'abeilles ou en tubes travaillant en compression. Le niveau d'absorption d'énergie est élevé (environ 2000 kJ de capacité totale). Il s'agit d'une pièce rapportée et encombrante qui présente l'inconvénient de ne pas intervenir dans la transmission des efforts longitudinaux dans le châssis.

Le dispositif selon l'invention permet de pallier ces différents inconvénients. Il présente un niveau d'absorption d'énergie élevé, en principe équivalent au bouclier. Il peut être installé dans l'épaisseur du châssis du véhicule et ainsi constituer l'un des éléments assurant la transmission des efforts longitudinaux dans le châssis.

Il est connu du document DE 39 20 993 un dispositif d'amortissement de choc comprenant au moins un ensemble constitué de deux éléments courbes disposés transversalement par rapport à la direction du choc et reliés l'un à l'autre par leurs extrémités de façon à se présenter leurs concavités.

Le dispositif d'amortissement de l'invention se caractérise en ce que les éléments sont des poutres de section creuse, constituées d'une lame extérieure commune aux deux poutres de chaque ensemble et d'une lame intérieure par poutre.

Cette construction a l'avantage de faciliter l'adaptation du dispositif d'absorption en fonction de la résistance des éléments composant le véhicule puisque ce système est de nature modulaire. On peut ainsi selon le cas disposer plusieurs ensembles de poutres en série et/ou en parallèle en largeur et en hauteur.

Les lames intérieures d'un ensemble sont soudées à la lame extérieure de l'ensemble un peu avant une articulation.

Les poutres peuvent avantageusement avoir des formes d'égale résistance en flexion.

Une articulation entre deux poutres d'un ensemble peut être réalisée par une lame flexible dont chaque extrémité est solidaire de l'une des poutres. Cette réalisation présente l'avantage de ne pas nécessiter d'entretien ni de graissage.

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 représente un dispositif d'amortissement de choc mettant en oeuvre un premier type de dispositifs d'articulation exclu de la protection demandée,
- la figure 2 représente une première variante de ce dispositif d'amortissement de choc mettant en oeuvre le premier type de dispositifs d'articulation exclu de la protection demandée,
- la figure 3 représente une variante de ce dispositif d'amortissement de choc mettant en oeuvre un second type de dispositifs d'articulation, cette variante et ce second type de dispositifs d'articulation faisant l'objet de la présente invention,
- les figures 4 et 5 sont des vues détaillées de la variante du dispositif d'amortissement de choc représenté à la figure 3,
- la figure 6 représente, vu de dessus, un dispositif d'amortissement de choc mettant en oeuvre le premier type de dispositifs d'articulation exclu de la protection demandée, utilisé pour la transmission des efforts longitudinaux dans un châssis de véhicule,
- les figures 7 à 9 sont des vues détaillées d'une troisième variante de dispositif d'amortissement de choc mettant en oeuvre le premier type de dispositifs d'articulation exclu de la protection demandée.

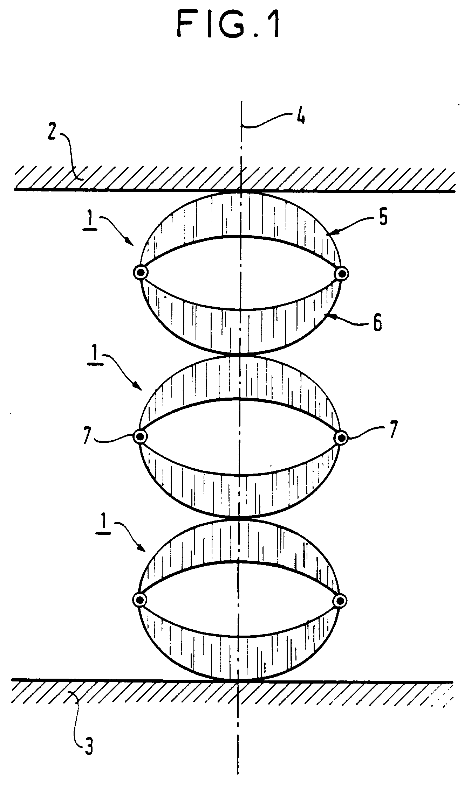

Selon la figure 1, le dispositif d'absorption d'énergie comprend trois ensembles 1 placés en série entre une première paroi 2 et une seconde paroi 3. Les ensembles 1 sont alignés selon l'axe 4 qui indique la direction dans laquelle peut se produire un choc. Chaque ensemble 1 est constitué de deux poutres courbes telles que 5 et 6. Chaque poutre a une section qui varie depuis l'axe 4(section maximale) jus'aux extrémités (section minimale). La variation de section des poutres est avantageusement choisie pour leur conférer une forme d'égale résistance en flexion. Pour un même ensemble, les poutres sont articulées l'une à l'autre par leurs extrémités grâce à des articulations 7.

L'articulation peut être obtenue par un axe ou par tout autre système permettant un effet charnière. Le type d'articulation sera choisi en fonction des efforts que doit supporter le dispositif.

L'écrasement d'un ensemble selon l'axe de compression peut être total sans cassure d'un élément. Il y a déformation progressive des poutres.

Chaque ensemble de deux poutres peut être fixé rigidement à un ensemble similaire adjacent. Le dispositif ainsi constitué est fixé rigidement aux parois 2 et 3 qui assurent la transmission des efforts. Les fixations peuvent être obtenues par boulonnage, rivetage ou soudage. Pour faciliter la fixation, il peut être nécessaire de souder sur les poutres des embases rapportées offrant une surface de fixation plus grande.

Pour réaliser les poutres, il est avantageux d'utiliser des profilés dont l'inertie transversale est variable et définie en fonction d'une caractéristique de flexion élastoplastique souhaitée lors de l'écrasement. Les profilés peuvent être creux, de section carrée ou rectangulaire par exemple.

Le métal utilisé pour réaliser les poutres présentera avantageusement une bonne aptitude à la déformation plastique. Il peut s'agir d'un acier. Certains alliages d'aluminium présentant cette caractéristique peuvent convenir. Les poutres sont par exemple constituées à partir d'éléments soudés ensemble.

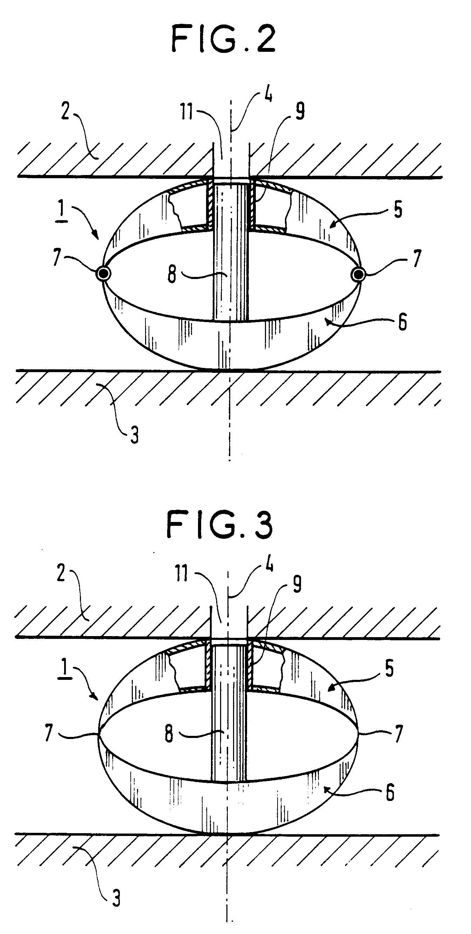

Le dispositif réprésenté à la figure 2 comprend en outre une glissière 8 de section circulaire et solidaire de la poutre 6. La poutre 5 est pourvue d'un fourreau 9 de réception de la glissière qui permet de la guider au cours de l'écrasement de l'ensemble. La paroi 2 est également pourvue d'un trou 11 permettant le débattement de la glissière 8. Cette disposition confère une meilleure efficacité au dispositif si le choc a une direction légèrement différente de l'axe 4.

Selon la variante de la figure 3, l'articulation 7 est réalisée par une simple tôle utilisée comme charnière plastique, l'ensemble 1 pouvant être constitué dans ce cas par une pièce unique mécano-soudée.

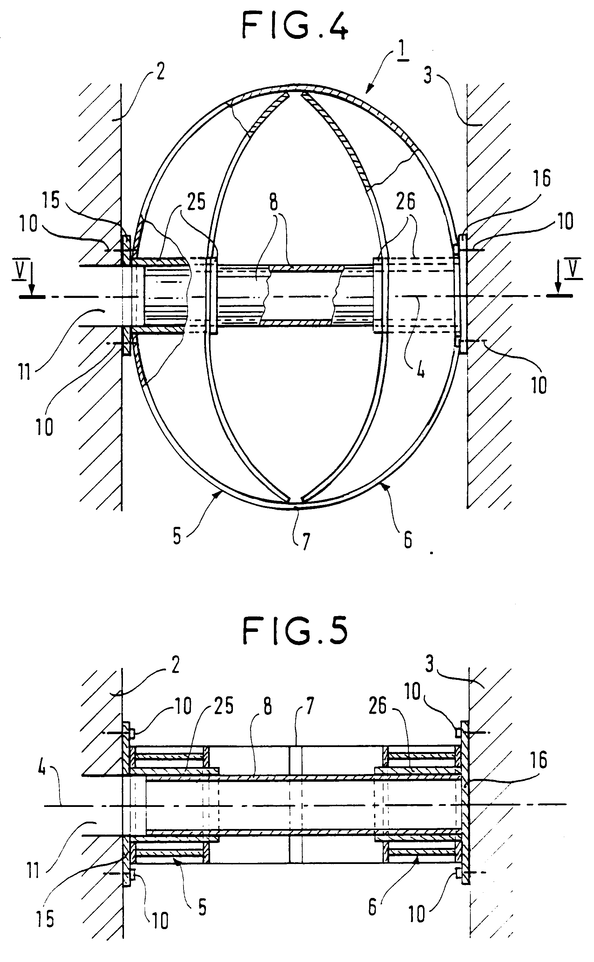

Les figures 4 et 5 sont illustratives de cette dernière variante. Sur ces figures, les axes 10 correspondent aux axes des boulons ou rivets de fixation du dispositif sur les surfaces d'appui 2 et 3. Les poutres 5 et 6 sont de section creuse rectangulaire et sont constituées par des lames métalliques assemblées par mécano-soudage. Chaque articulation 7 peut être réalisée simplement par continuité d'une lame extérieure commune aux deux poutres, les lames intérieures étant soudées à cette lame extérieure un peu avant l'articulation. Des embases 15 et 16 rapportées sur les poutres 5 et 6 facilitent la pose des poutres sur les parois 2 et 3. Les poutres 5 et 6 sont percées selon l'axe 4 d'un trou permettant la mise en place de fourreaux. Le fourreau 26 de la poutre 6 permet l'emmanchement de la glissière 8 qui est un tube. Le fourreau 25 de la poutre 5 permet le guidage de la glissière.

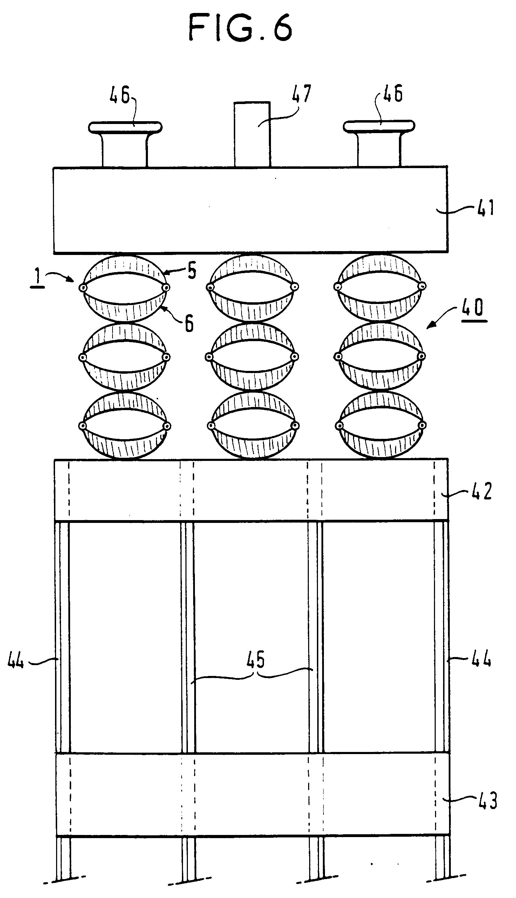

La figure 6 illustre le cas d'une intégration directe d'un dispositif dans une structure de châssis de véhicule ferroviaire. Le dispositif constitue alors l'un des éléments de transmission des efforts longitudinaux. Le dispositif absorbeur d'énergie 40 comprend plusieurs ensembles 1 de poutres placés en série et en parallèle. Il est disposé entre la traverse de tête 41 et la traverse de répartition 42. On distingue aussi d'autres parties du châssis représenté partiellement : une traverse secondaire 43, des longerons 44 et d'autres profilés longitudinaux 45.

L'un des avantages du dispositif selon l'invention est de pouvoir être intégré dans la structure du véhicule. On peut remplacer une traverse du châssis par le dispositif absorbeur d'énergie et dans ce cas on évite ainsi toute perte de place. Le dispositif peut être placé derrière les organes naturels de choc du véhicule tels que les tampons 46 et l'attelage 47. On peut également le placer ailleurs qu'aux extrémités de caisse et notamment latéralement, dans les bas de face.

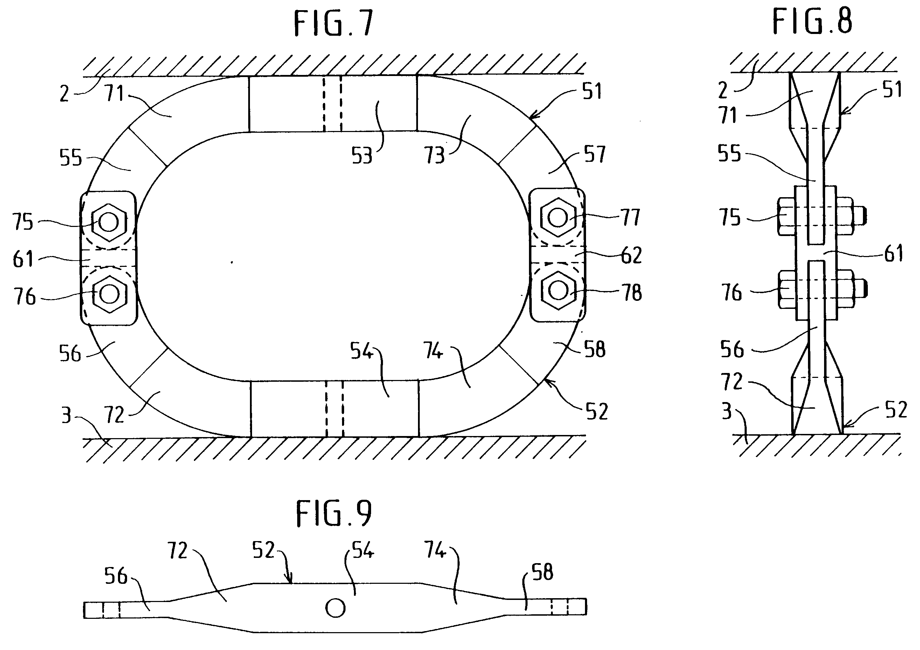

Les figures 7 à 9 illustrent une autre variante du dispositif.

Dans cet exemple, les poutres 51 et 52 sont reliées entre elles par des organes d'articulation intermédiaires 61 et 62. Chaque poutre comprend une partie centrale 53, 54 destinée à être fixée sur une paroi 2, 3 ou sur un autre ensemble. Les poutres se terminent par des extrémités de section plus faible 55, 57 et 56, 58 reliées aux parties centrales par des parties 71, 73 et 72, 74 de sections évolutives.

La figure 9 est une vue de la poutre 52 de la figure 7.

Les poutres sont articulées sur les organes 61 et 62 par des systèmes de boulons et d'écrous 75, 77 et 76, 78 permettant l'allongement des poutres lors d'un écrasement sans rupture des poutres.

## Revendications

1. Dispositif d'amortissement de choc, en particulier pour véhicules ferroviaires, comprenant au moins un ensemble (1) constitué de deux éléments courbes (5, 6) disposées transversalement par rapport à la direction du choc et reliés l'un à l'autre par leurs extrémités de façon à se présenter leurs concavités, caractérisé en ce que lesdits éléments sont des poutres (5, 6) de section creuse, constituées d'une lame extérieure commune aux deux poutres de chaque ensemble et d'une lame intérieure par poutre.

2. Dispositif selon la revendication 1, caractérisé en ce que lesdites lames intérieures d'un ensemble sont soudées à ladite lame extérieure dudit ensemble un peu avant une articulation.

3. Dispositif selon l'une des revendications 1 ou 2, caractérisé en ce que les poutres (5, 6) ont des formes d'égale résistance en flexion.

4. Dispositif selon l'une quelconque des revendications 1 à 3, caractérisé en ce qu'une articulation entre deux poutres d'un ensemble est réalisé par une lame flexible dont chaque extrémité est solidaire de l'une des poutres.

5. Dispositif selon l'une quelconque des revendications 1 à 4, caractérisé en ce que ledit ensemble comprend des moyens de guidage permettant que, lors d'un choc, l'ensemble s'écrase selon un axe imposé d'écrasement.

6. Dispositif selon la revendication 5, caractérisé en ce que les moyens de guidage comprennent une glissière (8) solidaire d'une poutre (6) et pouvant coulisser dans un fourreau (9) équipant l'autre poutre (5).

7. Dispositif selon l'une quelconque des revendications précédentes, caractérisé en ce qu'il comprend plusieurs ensembles (1) disposés en série et/ou en parallèle, les ensembles disposés en série étant alignés dans la direction du choc (4) et fixés entre eux.

8. Dispositif selon l'une quelconque des revendications précédentes, caractérisé en ce qu'il constitue l'un des éléments de transmission des efforts longitudinaux de compression et de traction dans les véhicules ferroviaires.

9. Dispositif selon la revendication 8, caractérisé en ce qu'il constitue une partie du châssis.

## Claims

1. Damper device, in particular a damper device for railroad vehicles comprising at least one set (1) of two curved members (5, 6) disposed transversely relative to the direction of impact and joined together at their ends so that their concave sides face each other, characterised in that said members are hollow beams (5, 6) comprising an external blade common to the two beams of each set and one internal blade per beam.

2. Device according to claim 1 characterised in that said internal blades of a set are welded to said external blade of said set slightly short of an articulation.

3. Device according to claim 1 or claim 2 wherein said beams (5, 6) have shapes of equal resistance in bending.

4. Device according to any one of claims 1 to 3 characterised in that an articulation between the two beams of a set is provided by a flexible blade each end of which is fastened to one beam.

5. Device according to any one of claims 1 to 4 characterised in that said set comprises guide means adapted to cause the set to be crushed along a predetermined crushing axis in the event of an impact.

6. Device according to claim 5 characterised in that said guide means comprise a slide member (8) fastened to one beam (6) adapted to slide in a sheath (9) fitted to the other beam (5).

7. Device according to any one of the preceding claims characterised in that it comprises a plurality of sets (1) disposed in series and/or in parallel, the sets disposed in series being aligned in the direction (4) of impact and fixed together.

8. Device according to any one of the preceding claims characterised in that it constitutes one longitudinal compression and tension load transmission member of a railroad vehicle.

9. Device according to claim 8 characterised in that it constitutes part of the chassis.

## Patentansprüche

1. Stoßdämpfervorrichtung, insbesondere für Schienenfahrzeuge, die mindestens eine Einheit (1) aufweist, die aus zwei gekrümmten Elementen (5, 6) besteht, die in Querrichtung in Bezug auf die Richtung des Stoßes angeordnet sind und die miteinander über ihre Enden derart verbunden sind, daß ihre konkaven Seiten einander gegenüberliegen, dadurch gekennzeichnet, daß diese Elemente Träger (5, 6) mit hohlem Querschnitt sind, die aus einer den beiden Trägern jeder Einheit gemeinsamen äußeren Lamelle und aus einer inneren Lamelle je Träger bestehen.

2. Vorrichtung nach Anspruch 1, dadurch gekennzeichnet, daß die inneren Lamellen einer Einheit an die äußere Lamelle der Einheit kurz vor einer Gelenkverbindung angeschweißt sind.

3. Vorrichtung nach einem der Ansprüche 1 oder 2, dadurch gekennzeichnet, daß die Träger (5, 6) Formen gleichen Biegewiderstands haben.

4. Vorrichtung nach einem beliebigen der Ansprüche 1 bis 3, dadurch gekennzeichnet, daß eine Gelenkverbindung zwischen zwei Trägern einer Einheit mittels einer biegsamen Lamelle erfolgt, von der jedes Ende an einem der Träger befestigt ist.

5. Vorrichtung nach einem beliebigen der Ansprüche 1 bis 4, dadurch gekennzeichnet, daß die Einheit Führungsmittel aufweist, die bei einem Stoß die Einheit gemäß einer gegebenen Kompressionsachse sich zusammendrücken läßt.

6. Vorrichtung nach Anspruch 5, dadurch gekennzeichnet, daß die Führungsmittel einen fest mit einem Träger (6) verbundenen Gleitkolben (8) aufweisen, der in einer Hülse (9) des anderen Trägers (5) gleitet.

7. Vorrichtung nach einem beliebigen der vorhergehenden Ansprüche, dadurch gekennzeichnet, daß sie mehrere Einheiten (1) aufweist, die in Reihe und/oder parallel angeordnet sind, wobei die in Reihe angeordneten Einheiten in Richtung der Stoßachse (4) fluchten und aneinander befestigt sind.

8. Vorrichtung nach einem beliebigen der vorhergehenden Ansprüche, dadurch gekennzeichnet, daß sie eines der Übertragungselemente für die Längskompressions- und Längszugkräfte bei Schienenfahrzeugen bilden.

9. Vorrichtung nach Anspruch 8, dadurch gekennzeichnet, daß sie Teil des Chassis ist.
